# EUROPÄISCHE PATENTSCHRIFT

(11) **EP 2 876 308 B1**
(45) Veröffentlichungstag und Bekanntmachung des Hinweises auf die Patenterteilung: **02.01.2019**
(21) Anmeldenummer: 14189662.1
(22) Anmeldetag: 21.10.2014
(51) Int. Cl.: F16J 1/12, F16J 10/02, G01B 7/00, F15B 15/28

(54) **Kolbenzylindereinheit mit Auswerteeinheit zur Positionsbestimmung des Kolbens**
Cylinder-piston unit with evaluation unit for determining the position of the piston
Unité de vérin à piston possédant une unité d'évaluation destinée à la détermination de la position du piston

(30) Priorität: 31.10.2013 DE 102013018342
(43) Veröffentlichungstag der Anmeldung: 27.05.2015
(73) Patentinhaber: Liebherr-Elektronik GmbH, 88131 Lindau (DE)
(72) Erfinder: Dropmann, Dipl. Ing. (FH) Markus, 88131 Lindau (DE); Engler, Dr.-Ing. Alfred, 88138 Sigmarszell (DE)
(74) Vertreter: Laufhütte, Dieter

(56) Entgegenhaltungen:
- EP-A2- 2 476 916
- DE-A1- 19 537 877
- DE-U1-202008 010 230
- GB-A- 2 300 714
- US-A- 4 587 850
- US-B2- 7 931 403

## Beschreibung

Die Erfindung betrifft eine Kolbenzylindereinheit mit einem Zylindermantel, einem Zylinderkopf und einer im Zylindermantel längsverschieblich geführten Kolbenstange sowie einer Auswerteeinheit, welche die Position der Kolbenstange bezüglich des Zylindermantels anhand der intrinsischen elektrischen Eigenschaften der Kolbenzylindereinheit bestimmt, wobei die Kolbenstange über ein oder mehrere Kontaktelemente im Bereich der Austrittsöffnung der Kolbenstange aus dem Zylinderkopf hochfrequenztauglich gegen den Zylinder oder den Zylinderkopf kurzgeschlossen ist.

Eine möglichst exakte Positionsbestimmung eines Zylinderkolbens wird für eine Reihe technischer Anwendungen vorausgesetzt, so zum Beispiel für die automatisierte Ansteuerung einer Kolbenzylindereinheit einer Baumaschine bzw. Hubgerätes unter Verwendung der exakten Kolbenposition als Regelgröße. Zudem kann die Positionsbestimmung zur Erhöhung der Betriebssicherheit beitragen, da der Einlass des Hydraulikmediums, insbesondere der Hydraulikflüssigkeit, in extremen Positionen des Zylinderkolbens exakt gesteuert und folglich rechtzeitig gestoppt werden muss.

Neben den konventionellen Messverfahren, die die aktuelle Kolbenposition durch angeordnete Seilzugpotentiometer bzw. auf Grundlage eines magnetostriktiven Prinzips ermitteln, haben sich weitere Messverfahren herauskristallisiert, die eine Bestimmung der Kolbenposition auf Grundlage der elektrischen Eigenschaften der Kolben-Zylindereinheit bestimmen. Ändert sich die aktuelle Kolbenposition, hat dies Einfluss auf die intrinsischen elektrischen Eigenschaften des Zylinders. Die Auswertung der elektrischen Eigenschaften erfolgt durch eine Auswerteeinheit, die mit der Kolbenstange und dem Zylindermantel in Verbindung steht, und unter Umständen mit hochfrequenten Signalen arbeitet.

Gegenwärtig wird eine Erdung der Kolbenstange an deren ausgefahrenen Ende praktiziert, d. h. im Bereich des Kolbenstangenauges, an dem die Krafteinleitung in die Mechanik ansetzt. Der aus dem Kolben herausgefahrene Kolbenstangenabschnitt wirkt jedoch über dessen Länge als Antennenstruktur, wodurch störende Einflüsse wie beispielsweise EMV, EMI aus der Umwelt auf das Positionsbestimmungssystem wirken. Gerade bei der Verwendung eines Messverfahrens auf Grundlage hochfrequenter Auswertesignale können störende EMV, EMI-Effekte die Genauigkeit des Positionssystems beeinflussen. Ebenfalls kann die Funktionsweise umliegender elektrischer und elektronischer Bauteile durch eine hochfrequente Abstrahlung beeinflusst werden.

Kolbenzylindereinheiten dieser Art sind aus den Druckschriften DE 19537877 und GB2300714 bereits bekannt.

Die vorliegende Erfindung setzt sich daher zum Ziel, eine Kolbenzylindereinheit mit einer derartigen Positionsmessvorrichtung weiterzubilden, die den Einfluss von problematischen Signaleinkopplungen bzw. -auskopplungen auf die Kolbenstange reduziert.

Diese Aufgabe wird durch eine Kolbenzylindereinheit mit den Merkmalen des Anspruchs 1 gelöst. Vorteilhafte Ausgestaltungen der Erfindung sind Gegenstand der abhängigen Unteransprüche.

Die Erfindung schlägt also eine Kolbenzylindereinheit mit einem Zylindermantel und einer im Zylindermantel längsverschieblich geführten Kolbenstange vor. Das Arbeitsprinzip der Kolbenzylindereinheit kann pneumatisch oder hydraulisch sein. Die Kolbenzylindereinheit umfasst eine Auswerteeinheit, welche die Position der Kolbenstange bezüglich des Zylindermantels anhand der intrinsischen elektrischen Eigenschaften der Kolbenzylindereinheit bestimmt. Die Auswerteeinheit ist dazu einerseits mit der Kolbenstange und andererseits mit dem Zylindermantel verbunden und kann über eine entsprechende Auswerteelektronik die intrinsischen elektrischen Eigenschaften der Kolbenzylindereinheit in Abhängigkeit von der Kolbenposition bestimmen.

Erfindungsgemäß ist die Kolbenstange über einen oder mehrere Kontaktelemente im Bereich der Austrittsöffnung der Kolbenstange aus dem Zylinderkopf hochfrequenztauglich gegen den Zylinder bzw. den Zylinderkopf kurzgeschlossen. Durch die frühzeitige Erdung der Kolbenstange, d.h. im Bereich der Austrittsöffnung, wird der Einfluss der als Antennenstruktur wirkenden ausgefahrenen Kolbenstange unterdrückt. Weiterhin kann der Einfluss der Abstrahlung der erzeugten Messsignale der Auswerteelektronik auf die umgebenden elektrischen und/oder elektronischen Bauteile reduziert werden.

Die Erdung kann über eine Kontaktierung am Zylinderkopf mit dem Zylinder erfolgen, wenn der Zylinder durch seine Einbaulage mit dem Maschinen-Chassis verbunden ist. Hierdurch wird eine hochfrequenzmäßig sehr wirkungsvolle Kontaktierung der Kolbenstange zum Zylinderpotential erreicht, wodurch sich Verbesserungen in der Unterdrückung von ab- und eingestrahlten elektromagnetischen Signalen ergeben. Dies steigert die Unempfindlichkeit gegenüber EMI und reduziert die elektromagnetische Abstrahlung der aktiven Auswerteelektronik.

Die Erdung kann über eine leitfähige Verbindung zwischen Kolbenstange und Zylinderkopf erfolgen, beispielsweise durch einen oder mehrere Schleifkontakte etc. Denkbar ist es in diesem Fall, dass die Auswerteelektronik zumindest teilweise innerhalb des Zylinderkopfes angeordnet ist und mit der Kolbenstange bzw. dem Zylindermantel verbunden ist. Zumindest sollte die Anbindung/Kontaktierung der Auswerteelektronik mit der Kolbenstange innerhalb des Zylinderkopfes, d.h. zwischen Kurzschlusskontakt und Kolben erfolgen.

Der durch die erfindungsgemäße Erdung verursachte Kurzschluss kann möglicherweise die intrinsische Auswertung der Kolbenzylindereinheit verhindert. Dieser Kurzschluss wird durch Einbindung wenigstens einer Abschirmimpedanz aufgelöst die mit den intrinsisch elektrischen Eigenschaften der Kolbenzylindereinheit parallel geschaltet ist. Anders formuliert ist die wenigstens eine Abschirmimpedanz in Reihe mit dem Kurzschlusspfad geschaltet, d.h. in Serie zur Kolbenstange und dem Kurzschlusskontakt. Durch Einführen der Serienimpedanz lässt sich der durch die Erdung der Kolbenstange gebildete Kurzschlusszweig hochfrequenzmäßig wieder auflösen.

Die wenigstens eine Abschirmimpedanz weist vorzugsweise eine frequenzabhängige Impedanz auf. Die Abschirmimpedanz kann einen Abschirmring aus einem permeablen Material umfassen, der koaxial auf der Kolbenstange sitzt. Gemäss der Erfindung ist die Abschirmimpedanz zwischen der Anbindung der Auswerteeinheit an der Kolbenstange und dem Kurzschlusskontakt angeordnet, wodurch sich eine Reihenschaltung von Auswerteeinheit und Abschirmimpedanz zum Erdungs- bzw. Zylinderpotential ergibt.

Es besteht die Möglichkeit, die Auswerteeinheit galvanisch mit der Kolbenstange zu verbinden. Alternativ bietet sich eine kapazitive Anbindung der Auswerteeinheit an. In diesem Fall kann die Anbindung der Auswerteeinheit mittels einer dielektrisch isolierten Gegenelektrode erfolgen, die konzentrisch oder teilkonzentrisch um die Kolbenstange geführt ist. Die Gegenelektrode ist vorzugsweise galvanisch mit der Auswerteeinheit verbunden.

Ist die Abschirmimpedanz in Reihe mit der Auswerteeinheit verschaltet, so haben kleine Widerstandsänderungen weniger Einfluss auf die Messung. Dadurch ist das System derart abgeschirmt, dass eine höhere Impedanz bei der Anbindung, insbesondere bei einer kapazitiven Kopplung mit der Kolbenstange, zulässig ist. Eine höhere tolerierbare Impedanz würde im Falle der kapazitiven Kopplung eine Flächen- bzw. Volumenreduzierung der Anbindung erlauben, was Vorteile hinsichtlich der engen Platzverhältnisse innerhalb des Zylinderkopfes mit sich bringt.

In einer bevorzugten Ausgestaltung der Erfindung bestimmt die Auswerteeinheit der Kolbenzylindereinheit die aktuelle Kolbenposition anhand der induktiven und/oder ohmschen Eigenschaften des gebildeten Leitungsweges zwischen Zylindermantel, Kolben und Kolbenstange. Hierzu ist es zweckmäßig, wenn der Kolben und der Zylindermantel mittels eines elektrisch leitenden Kolbenrings oder Schleifkontaktes miteinander leitend verbunden sind. Der Kolbenring bzw. der Schleifkontakt ist dazu zwischen Kolben und Zylindermantel angeordnet.

Die Auswertung dieser induktiven und ohmschen Variablen kann sowohl auf Wechselspannung als auch auf Gleichspannung basierenden Auswerteverfahren erfolgen. Die Auswerteeinheit ist dazu mit einer entsprechenden Auswerteelektronik versehen.

Alternativ besteht die Möglichkeit, dass die Auswerteeinheit die Kolbenposition anhand der intrinsischen Kapazität des vom Zylindermantel, Kolbenstange und einem als Dielektrikum wirkenden Medium innerhalb des Zylindermantels gebildeten Kondensators bestimmt. Die Auswerteeinheit setzt eine Oszillatorschaltung für die Kapazitätsbestimmung der aus Kolben und Zylindermantel gebildeten Kapazität ein.

Weiterhin besteht die Möglichkeit, dass die Auswerteeinheit das Resonanzverhalten des aus Zylindermantel, Kolbenstange und Kolben gebildeten Schwingkreises bestimmt. Die notwendige Kapazität des Schwingkreises wird durch den Zylindermantel und die Kolbenstange gebildet, wobei ein im Zylindermantel enthaltenes Medium, beispielsweise Hydrauliköl, als Dielektrikum wirkt. Die Leitungswege bzw. die Auswerteelektronik wirkt als Induktivität des Schwingkreises. Zum Beispiel wird durch Anregung mithilfe eines Oszillators eine Schwingung innerhalb des gebildeten Schwingkreises erzeugt, die mithilfe der Auswerteeinheit entsprechend ausgewertet wird.

Neben der erfindungsgemäßen Kolbenzylindereinheit betrifft die Erfindung eine Maschine bzw. Arbeitsmaschine, insbesondere Baumaschine, Hubgerät, Industriemaschine, Werkzeugmaschine oder Luftfahrzeug mit einer entsprechenden Kolbenzylindereinheit gemäß der vorliegenden Erfindung. Die Maschine weist offensichtlich dieselben Vorteile und Eigenschaften wie die erfindungsgemäße Kolbenzylindereinheit auf, weshalb an dieser Stelle auf eine wiederholende Beschreibung verzichtet wird. Innerhalb eines Luftfahrzeuges wird die erfindungsgemäße Kolbenzylindereinheit vorzugsweise für das Fahrwerksystem oder Flugsteuerungsaktuatoren eingesetzt.

Weitere Vorteile und Eigenschaften der Erfindung sollen im Folgenden anhand des in den Figuren dargestellten Ausführungsbeispiels näher erläutert werden. Es zeigen:
- Fig. 1:: eine schematische Ansicht einer Kolbenzylindereinheit mit einer Resonanzmessvorrichtung,
- Fig. 2:: eine zweite Darstellung einer Kolbenzylindereinheit zur Durchführung eines ohmschen bzw. induktiven Messverfahrens,
- Fig. 3:: eine Darstellung der erfindungsgemäßen Kolbenzylindereinheit mit Kurzschlusskontakt und
- Fig. 4:: eine Schnittdarstellung der kapazitiven Anbindung der Auswerteeinheit.

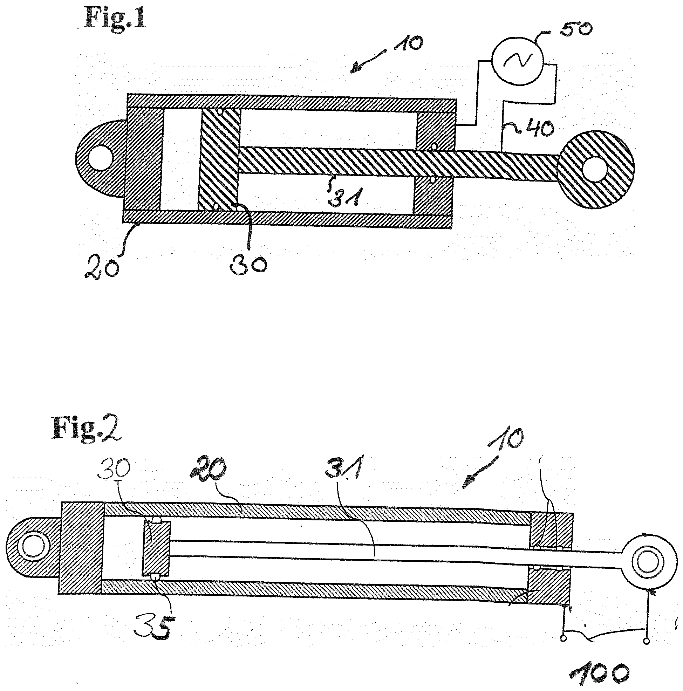

Fig. 1 zeigt eine Kolbenzylindereinheit 10 mit einer Vorrichtung zur Positionsbestimmung. Der Aufbau der Kolbenzylindereinheit 10 ähnelt einer bekannten Kolbenzylindereinheit. Im Einzelnen umfasst die Einheit 10 einen rohrförmigen Zylindermantel 20, in dessen Hohlraum ein Kolben 30 mit angeordneter Kolbenstange 31 linear verschiebbar gelagert ist.

Die Kolbenzylindereinheit 10 wird bevorzugt bei Baumaschinen bzw. Hubgeräten eingesetzt, wobei ein befestigtes Arbeitsgerät durch die Kolbenzylindereinheit 10 angetrieben wird. Der Automatikbetrieb des Arbeitsgerätes erfordert die präzise Positionsbestimmung des Kolbens 30.

Für die exakte Positionsbestimmung wird im Beispiel der Fig. 1 ausgenützt, dass die gesamte Kolbenzylindereinheit 10 durch entsprechende Anregung als elektrischer Schwingkreis wirkt. Im Einzelnen bildet der Kolben 30 eine erste Elektrode eines Resonanzkreises und der Zylindermantel 20 die zugehörige zweite Elektrode. Zwischen dem Kolben 30 und dem Zylindermantel 20 befindet sich bei einem Hydraulikzylinder ein Hydraulikmedium, insbesondere Hydrauliköl, das als Dielektrikum zwischen den beiden Elektroden wirkt.

Zur Anregung des Schwingkreises dient der Oszillator 50, der über die elektrischen Leitungen 40 einmal mit dem Zylindermantel 20, sowie mit der Kolbenstange 31 in Verbindung steht. Nach Anregung des Schwingkreises über den Oszillator 50 schwingt dieser mit seiner Resonanzfrequenz, wobei die Impedanz des gebildeten Schwingkreises aus Kolben 30, Kolbenstange 31, Zylindermantel 20 und Auswerteelektronik 50 von der jeweiligen Stellung des Kolbens 30 im Hohlraum des Zylinders abhängt. Da die Kapazität bzw. Induktivität des Schwingkreises die einstellende Resonanzfrequenz beeinflussen, lässt sich anhand der erfassten Resonanzfrequenz ein Rückschluss auf die vorliegende Impedanz der Kolbenzylindereinheit 10 und die Position des Kolbens 30 treffen. Zu diesem Zweck wird im Bereich des Oszillators 50 eine entsprechende Ausgangsspannung abgegriffen und durch eine entsprechende Auswerteelektronik analysiert bzw. interpretiert.

Fig. 2 zeigt eine etwa baugleiche Kolbenzylindereinheit 10, wobei jedoch hier der Kolben 30 über den Kontaktring 35 leitend mit dem Zylindermantel 20 verbunden ist. Gegenüber der Fig. 1 wird hier die Tatsache ausgenützt, dass sich die ohmschen bzw. induktiven Eigenschaften der Kolbenzylindereinheit 10 in Abhängigkeit der Kolbenstellung verändern. Um die rein induktiven und/oder ohmschen Eigenschaften des Zylinders 10 auswerten zu können, muss eine leitende Verbindung zwischen dem Kolben 30 und dem Zylindermantel 20 bzw. der Innenwand des Zylindermantels 20 hergestellt werden. Dieser elektrische Kontakt wird durch den koaxial auf dem Kolbenumfang 30 angeordneten Kolbenring 35 ermöglicht.

Die Auswerteeinheit wird über die beiden Anschlusspole 100 mit der Kolbenzylindereinheit 10 elektrisch leitend verbunden. Die Auswertung dieser induktiven und ohmschen Variablen kann sowohl durch ein auf Wechselspannung, als auch auf Gleichspannung basierendes Auswerteverfahren erfolgen. Für ein auf Gleichspannung basierendes Auswerteverfahren oder ein auf Wechselspannung mit niedriger Frequenz basierendes Auswerteverfahren lassen sich die Eigenschaften des gebildeten Leitungsweges grob über den ohmschen Widerstand sowie deren Induktivität beschreiben. Beide Größen sind abhängig von der Leitungslänge bzw. der Position des Kolbens 30. Sofern die Auswerteeinheit eine hochfrequente Wechselspannung für die Auswertung verwendet, müssen weitere Größen, wie beispielsweise der Induktivitätsbelag, der Widerstandsbelag, der Ableitungsbelag sowie der Kapazitätsbelag berücksichtigt werden.

Die Auswerteeinheit kann ebenfalls als Messbrücke ausgeführt sein, die mit den Anschlusspolen 100 verbunden wird und den ohmschen Widerstand der angeschlossenen Kolbenzylindereinheit 10 in Abhängigkeit der Kolbenposition bestimmt. Neben der Verwendung einer Messbrücke als Auswerteeinheit können die induktiven und/oder ohmschen Variablen der Kolbenzylindereinheit 10 auch über die Erfassung der externen Resonanz, als auch durch Messung der Impulsantwort der Kolbenzylindereinheit bestimmt werden.

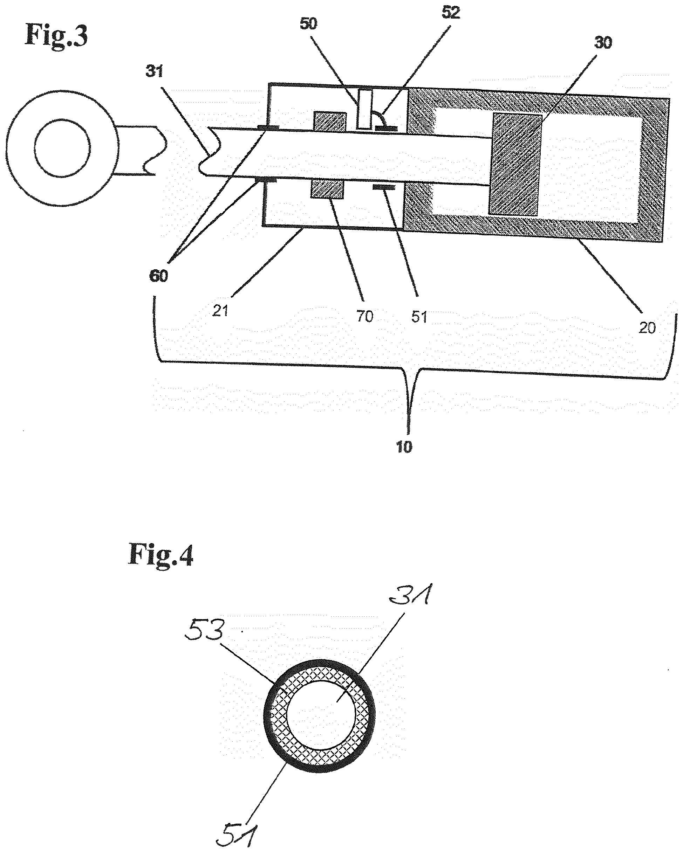

Fig. 3 zeigt nun die erfindungsgemäße Erdung der Kolbenstange im Bereich des Zylinderkopfes. Dieses neuartige Erdungskonzept kann gleichermaßen für das Messverfahren der Figur 1 als auch für das Messverfahren gemäß Figur 2 verwendet werden.

Die dargestellte Kolbenzylindereinheit 10 umfasst ebenfalls den Zylindermantel 20, sowie die darin längenverschieblich geführte Kolbenstange 31 mit dem endseitig angeordneten Kolben 30. Die notwendige Auswerteelektronik 50 wird anders als in den Figuren 1, 2 innerhalb des Zylinderkopfes 21 via der galvanischen Verbindung 52 sowie der Anbindung 51 an die Kolbenstange 31 angebunden. Weiterhin wird im Gegensatz zum Aufbau der Figuren 1, 2 die Erdung nicht erst im Bereich des Kolbenstangenauges vorgenommen, sondern die Anbindung an das Zylinderpotential (Zylindermantel 20) erfolgt im Bereich der Austrittsöffnung der Kolbenstange 31 aus dem Zylinderkopf 21. Dazu ist der Kurzschlusskontakt 60 vorgesehen, der die Kolbenstange 31 gleitend lagert und diese elektrisch mit dem Zylinderkopf 21 verbindet. Dazu ist der elektrische Übergang flächig und/oder punktuell kontaktierend sowie in einfacher oder mehrfacher Form ausgeführt. Der Kurzschlusskontakt 60 kann neben der Lager- und Kontaktfunktion der Kolbenstange 31 auch als reines Kontaktelement ausgeführt werden, wobei dann die Lagerfunktion durch ein zusätzliches mechanisches Bauteil übernommen wird.

Der Zylinderkopf 21 ist mit dem Zylindergehäuse (Zylindermantel 20) galvanisch leitend verbunden. In der Einbaulage ist die Kolbenzylindereinheit 10 mit einem Maschinen-Chassis verbunden, wodurch ebenfalls, konstruktiv bedingt, eine Erdung der Kolbenstange 31 im Auslassbereich über das Kolbenstangenauge erzielt wird. Dadurch wird eine hochfrequenzmäßig sehr wirkungsvolle Kontaktierung der Kolbenstange 31 zum Zylinderpotential erreicht und es ergeben sich Verbesserungen in der Unterdrückung von ab- und eingestrahlten elektromagnetischen Signalen. Zudem wird die Unempfindlichkeit gegenüber EMI verbessert und die elektromagnetische Abstrahlung des aktiven Positionserfassungssystems 50 wird reduziert.

Die Abschirmimpedanz befindet sich elektrisch parallel zum intrinsischen Schwingkreis des Kolbenzylindersystems. Um hochfrequenztechnisch den durch den eingeführten Kurzschlusskontakt 60 verursachten Kurzschluss zwischen Anbindung 51 und Zylinderkopf 21 (Zylindermantel 20) über den Weg der Kolbenstange 31 und Kurzschlusskontakt 60 aufzulösen, wird der Abschirmring 70 eingeführt. Dieser besitzt eine frequenzabhängige Impedanz, die ihrerseits in Serie zur Kolbenstange 31 und dem Kurzschlusskontakt 60, d.h. dem Kurzschlusszweig, liegt. Dadurch wird es erst wieder möglich, die intrinsischen Eigenschaften des Kolbenzylindersystems über Anbindung 51, Kolbenstange 31 in Richtung Kolben 30 und Zylindermantel 20 mit der Auswerteeinheit 50 und dessen Verbindung 52 zu messen.

Um die gewünschte EMI Eigenschaft zu erhalten, wird die Kolbenstange 31 hochfrequenztauglich gegen den Zylinder bzw. Zylinderkopf kurzgeschlossen. Der dadurch verursachte Kurzschluss verhindert aber seinerseits die Auswertung des intrinsischen Schwingkreises des Kolbenzylindersystems. Um dies wieder zu ermöglichen, wird intern der Kurzschlusszweig durch Einführen einer Serienimpedanz (Abschirmring 70) hochfrequenzmäßig wieder aufgelöst.

Zur hochfrequenten Entkopplung der Kolbenstange 31 von der Anbindung 51 in Richtung des Kurzschlusskontaktes 60 wird um die Kolbenstange 31 ein Abschirmring 70 aus einem permeablen Material positioniert. In der dargestellten Lösung befindet sich der Kontaktring 51 der Anbindung nunmehr in Reihe mit der Abschirmimpedanz des Abschirmrings 70, womit kleine Widerstandsänderungen weniger Einfluss auf die Messung haben. Weiterhin ist das System dadurch so abgeschirmt, dass eine höhere Impedanz bei der Anbindung zulässig ist.

Die Anbindung 51 kann entweder galvanisch oder durch eine kapazitive Kopplung erfolgen. Hierzu zeigt Fig. 4 eine Möglichkeit für eine kapazitive Anbindung, bei der eine dielektrisch isolierte Gegenelektrode 53 konzentrisch bzw. teilkonzentrisch auf der Kolbenstange 31 sitzt. Zwischen Auswerteelektronik 50 und kapazitiver Anbindung 51 erfolgt eine direkte galvanische Kontaktierung. Durch die optimierte Abschirmung des Systems, die durch den Kurzschlusskontakt 60 erreicht wird, wird eine höhere Impedanz bei der kapazitiven Kopplung 51 geduldet, wodurch eine Flächen- und Volumenreduzierung der Anbindung 51 möglich ist.

## Patentansprüche

1. Kolbenzylindereinheit (10) mit einem Zylindermantel (20), einem Zylinderkopf (21) und einer im Zylindermantel (20) längsverschieblich geführten Kolbenstange (31) sowie einer Auswerteeinheit (50), welche die Position der Kolbenstange (31) bezüglich des Zylindermantels (20) anhand der intrinsischen elektrischen Eigenschaften der Kolbenzylindereinheit (10) bestimmt, wobei die Kolbenstange (31) über ein oder mehrere Kontaktelemente im Bereich der Austrittsöffnung der Kolbenstange (31) aus dem Zylinderkopf (21) hochfrequenztauglich gegen den Zylindermantel (20) oder den Zylinderkopf (21) kurzgeschlossen ist, dadurch gekenzeichnet, dass wenigstens eine Abschirmimpedanz (70) zwischen der Anbindung (51) der Auswerteeinheit (50) an die Kolbenstange (31) und dem Kurzschlusskontakt (60) angeordnet ist.

2. Kolbenzylindereinheit (10) nach Anspruch 1, **dadurch gekennzeichnet, dass** die Abschirmimpedanz (70) als Abschirmring (70) aus einem permeablen Material ausgestaltet ist, der koaxial auf der Kolbenstange (31) sitzt.

3. Kolbenzylindereinheit (10) nach einem der vorhergehenden Ansprüche, **dadurch gekennzeichnet, dass** die Auswerteeinheit (50) galvanisch mit der Kolbenstange (31) verbunden ist.

4. Kolbenzylindereinheit (10) nach einem der vorhergehenden Ansprüche, **dadurch gekennzeichnet, dass** die Auswerteeinheit (50) kapazitiv mit der Kolbenstange (31) in Verbindung steht.

5. Kolbenzylindereinheit (10) nach Anspruch 4, **dadurch gekennzeichnet, dass** die Anbindung (51) mittels einer dielektrisch isolierten Gegenelektrode (53) erfolgt, die konzentrisch oder teilkonzentrisch um die Kolbenstange (31) geführt ist, und galvanisch mit der Auswerteeinheit (50) verbunden ist.

6. Kolbenzylindereinheit (10) nach einem der vorhergehenden Ansprüche, **dadurch gekennzeichnet, dass** die Auswerteeinheit (50) und/oder die Abschirmimpedanz (70) zumindest teilweise innerhalb der Zylinderkopfes (21) angeordnet sind.

7. Kolbenzylindereinheit (10) nach einem der vorhergehenden Ansprüche, **dadurch gekennzeichnet, dass** Kolben (30) und Zylindermantel (20) leitend miteinander verbunden sind und die Auswerteeinheit (50) die Kolbenposition anhand der induktiven und/oder ohmschen Eigenschaften des gebildeten Leitungswegs bestimmt.

8. Kolbenzylindereinheit (10) nach Anspruch 7, **dadurch gekennzeichnet, dass** Zylinderkolben und Zylindermantel (20) mittels eines elektrisch leitenden Kolbenrings (35) oder Schleifkontakts, der zwischen Kolben (30) und Zylindermantel (20) angeordnet ist, leitend miteinander verbunden sind.

9. Kolbenzylindereinheit (10) nach einem der vorhergehenden Ansprüche, **dadurch gekennzeichnet, dass** die Auswerteeinheit (50) die Kolbenposition anhand der intrinsischen Kapazität des von Zylindermantel (20), Kolbenstange (31) und einem als Dielektrikum wirkenden Medium innerhalb des Zylinders gebildeten Kondensators bestimmt.

10. Kolbenzylindereinheit (10) nach einem der vorhergehenden Ansprüche, **dadurch gekennzeichnet, dass** die Auswerteeinheit (50) das Resonanzverhalten des aus Zylindermantel (20), Kolbenstange (31) und Kolben (30) gebildeten Schwingkreises bestimmt und anhand der Resonanzschwingung die Kolbenposition bestimmt

11. Kolbenzylindereinheit (10) nach einem der vorhergehenden Ansprüche, **dadurch gekennzeichnet, dass** die Auswerteeinheit (50) eine Auswerteelektronik (50) aufweist, welche die Kapazität und/oder das Resonanzverhalten mittels einer Oszillatorschaltung ermittelt.

12. Kolbenzylindereinheit (10) nach einem der vorhergehenden Ansprüche, **dadurch gekennzeichnet, dass** die Auswerteeinheit (50) eine Auswerteelektronik (50) aufweist, welche die Auswertung auf Grundlage einer Messbrücke, Impulsantwort, Impedanz-/Phasenmessung, komplexen Standing-Wave-Ratio (SWR)-Messung, Mehrfrequenz-(MF), vektorielle oder skalare Netzwerkanalyse vornimmt.

13. Maschine, insbesondere Baumaschine, Hubgerät, Industriemaschine, Werkzeugmaschine oder Luftfahrzeug, mit einer Kolbenzylindereinheit (10) nach einem der vorhergehenden Ansprüche.

## Claims

1. A piston-cylinder unit (10) with a cylinder jacket (20), a cylinder head (21) and a piston rod (31) longitudinally shiftably guided in the cylinder jacket (20), as well as an evaluation unit (50) which determines the position of the piston rod (31) with respect to the cylinder jacket (20) on the basis of the intrinsic electrical properties of the piston cylinder unit (10), wherein the piston rod (31) is short-circuited against the cylinder jacket (20) or the cylinder head (21) in a manner suitable for high frequencies via one or more contact elements in the region of the exit opening of the piston rod (31) out of the cylinder head (21) **characterized in that**
at least one shielding impedance (70) is arranged between the connection (51) of the evaluation unit (50) to the piston rod (31) and the short-circuit contact (60).

2. The piston-cylinder unit (10) according to claim 1, **characterized in that** the shielding impedance (70) is formed as a shielding ring (70) of a permeable material, which is coaxially seated on the piston rod (31).

3. The piston-cylinder unit (10) according to any of the preceding claims, **characterized in that** the evaluation unit (50) is galvanically connected with the piston rod (31).

4. The piston-cylinder unit (10) according to any of the preceding claims, **characterized in that** the evaluation unit (50) is capacitively connected with the piston rod (31).

5. The piston-cylinder unit (10) according to claim 4, **characterized in that** the connection (51) is effected by means of a dielectrically insulated counterelectrode (53), which is concentrically or partly concentrically guided around the piston rod (31) and is galvanically connected with the evaluation unit (50).

6. The piston-cylinder unit (10) according to any of the preceding claims, **characterized in that** the evaluation unit (50) and/or the shielding impedance (70) are at least partly arranged within the cylinder head (21).

7. The piston-cylinder unit (10) according to any of the preceding claims, **characterized in that** piston (30) and cylinder jacket (20) are conductively connected with each other and the evaluation unit (50) determines the piston position on the basis of the inductive and/or ohmic properties of the conduction path formed.

8. The piston-cylinder unit (10) according to claim 7, **characterized in that** cylinder piston and cylinder jacket (20) are conductively connected with each other by means of an electrically conductive piston ring (35) or sliding contact, which is arranged between piston (30) and cylinder jacket (20).

9. The piston-cylinder unit (10) according to any of the preceding claims, **characterized in that** the evaluation unit (50) determines the piston position on the basis of the intrinsic capacitance of the capacitor formed by the cylinder jacket (20), the piston rod (31) and a medium acting as dielectric within the cylinder.

10. The piston-cylinder unit (10) according to any of the preceding claims, **characterized in that** the evaluation unit (50) determines the resonance behavior of the resonant circuit formed of cylinder jacket (20), piston rod (31) and piston (30) and determines the piston position on the basis of the resonance vibration.

11. The piston-cylinder unit (10) according to any of the preceding claims, **characterized in that** the evaluation unit (50) comprises an evaluation electronics (50) which determines the capacitance and/or the resonance behavior by means of an oscillator circuit.

12. The piston-cylinder unit (10) according to any of the preceding claims, **characterized in that** the evaluation unit (50) comprises an evaluation electronics (50) which performs the evaluation on the basis of a measurement bridge, pulse response, impedance/phase measurement, complex standing-wave-ratio (SWR) measurement, multifrequency (MF), vectorial or scalar network analysis.

13. A machine, in particular construction machine, hoisting implement, industrial machine, machine tool or aircraft, with a piston-cylinder unit (10) according to any of the preceding claims.

## Revendications

1. Unité de vérin à piston (10) comprenant une chemise de vérin (20), une tête de vérin (21) et une tige de piston (31) guidée dans la chemise du vérin (20) de manière longitudinale-déplaçable ainsi qu'une unité d'évaluation (50), qui détermine la position de la tige du piston (31) par rapport à la chemise du vérin (20) à l'aide des caractéristiques électriques intrinsèques de l'unité de vérin à piston (10), la tige de piston (31) étant court-circuitée à haute fréquence, via un ou plusieurs éléments de contact dans la zone de l'orifice de sortie de la tige du piston (31) hors de la tête du vérin (21), par rapport à la chemise du vérin (20) ou la tête du vérin (21),
**caractérisée en ce que**
au moins une impédance de blindage (70) se trouve entre la connexion (51) de l'unité d'évaluation (50) sur la tige du piston (31) et la borne de court-circuit (60).

2. Unité de vérin à piston (10) selon la revendication 1, **caractérisée en ce que** l'impédance de blindage (70) est conçue comme un anneau de blindage (70) fabriqué dans un matériau perméable, qui est placé coaxialement sur la tige du piston (31).

3. Unité de vérin à piston (10) selon l'une quelconque des revendications précédentes, **caractérisée en ce que** l'unité d'évaluation (50) est reliée galvaniquement à la tige de piston (31).

4. Unité de vérin à piston (10) selon l'une quelconque des revendications précédentes, **caractérisée en ce que** l'unité d'évaluation (50) est en contact capacitif avec la tige de piston (31).

5. Unité de vérin à piston (10) selon la revendication 4, **caractérisée en ce que** la connexion (51) se fait au moyen d'une contre-électrode (53) isolée diélectriquement, qui est guidée de manière concentrique ou partiellement concentrique autour de la tige du piston (31) et reliée galvaniquement à l'unité d'évaluation (50).

6. Unité de vérin à piston (10) selon l'une quelconque des revendications précédentes, **caractérisée en ce que** l'unité d'évaluation (50) et/ou l'impédance de blindage (70) se trouve, au moins partiellement, à l'intérieur de la tête du vérin (21).

7. Unité de vérin à piston (10) selon l'une quelconque des revendications précédentes, **caractérisée en ce que** le piston (30) et la chemise du vérin (20) sont reliés l'un à l'autre de manière conductrice et **en ce que** l'unité d'évaluation (50) détermine la position du piston à l'aide des caractéristiques inductives et/ou résistives de la voie électrique formée.

8. Unité de vérin à piston (10) selon la revendication 7, **caractérisée en ce que** le piston du vérin et la chemise du vérin (20) sont reliés l'un à l'autre de manière électro-conductrice au moyen d'un segment de piston (35) électro-conducteur ou d'un contact coulissant, qui est disposé entre le piston (30) et la chemise du vérin (20).

9. Unité de vérin à piston (10) selon l'une quelconque des revendications précédentes, **caractérisée en ce que** l'unité d'évaluation (50) détermine la position du piston à l'aide de la capacité intrinsèque du condensateur formé par la chemise du vérin (20), la tige de piston (31) et un fluide agissant comme un milieu diélectrique à l'intérieur du vérin.

10. Unité de vérin à piston (10) selon l'une quelconque des revendications précédentes, **caractérisée en ce que** l'unité d'évaluation (50) détermine la résonance du circuit résonant formé par la chemise du vérin (20), la tige de piston (31) et le piston (30) et détermine la position du piston à l'aide de l'oscillation de résonance.

11. Unité de vérin à piston (10) selon l'une quelconque des revendications précédentes, **caractérisée en ce que** l'unité d'évaluation (50) comporte une électronique d'évaluation (50), laquelle identifie la capacité et/ou la résonance au moyen d'un circuit oscillateur.

12. Unité de vérin à piston (10) selon l'une quelconque des revendications précédentes, **caractérisée en ce que** l'unité d'évaluation (50) comporte une électronique d'évaluation (50), laquelle effectue l'évaluation sur la base d'un pont de mesure, d'une réponse impulsionnelle, d'une mesure d'impédance/de phase, d'une mesure complexe du rapport d'ondes stationnaires (SWR) et d'une analyse de réseau multifréquence (MF), vectorielle ou scalaire.

13. Machine, plus précisément une machine de chantier, un appareil de levage, une machine industrielle, une machine-outil ou un aéronef, dotée d'une unité de vérin à piston (10) selon l'une quelconque des revendications précédentes.
